# EUROPEAN PATENT SPECIFICATION

(11) **EP 1 294 156 B1**
(45) Date of publication and mention of the grant of the patent: **19.10.2005**
(21) Application number: 02256003.1
(22) Date of filing: 29.08.2002
(51) Int. Cl.: H04L 29/06

(54) **Method and apparatus for transferring packets in network with monitoring of malicious packets**
Methode und Vorrichtung zur Paketübertragung in einem Netzwerk mit Überwachung von unzulässigen Paketen
Système et procédé de transfert de paquets dans un réseau avec surveillance des paquets malveillants

(30) Priority: 13.09.2001 JP 2001278475
(43) Date of publication of application: 19.03.2003
(73) Proprietor: KABUSHIKI KAISHA TOSHIBA, Tokyo (JP)
(72) Inventor: Tateoka, Masamichi, Kabushiki Kaisha Toshiba, Minato-ku, Tokyo 105-8001 (JP)
(74) Representative: Brookes Batchellor

(56) References cited:
- EP-A- 0 658 837
- WO-A-01/06726
- WO-A-99/38303
- GB-A- 2 333 427
- US-A- 5 835 726
- YEOM H Y ET AL: "IP MULTIPLEXING BY TRANSPARENT PORT-ADDRESS TRANSLATOR" PROCEEDINGS OF THE SYSTEMS ADMINISTRATION CONFERENCE. LISA, XX, XX, 29 September 1996 (1996-09-29), pages 113-121, XP000826921
- BELLOVIN S M ET AL: "NETWORK FIREWALLS" IEEE COMMUNICATIONS MAGAZINE, IEEE SERVICE CENTER. PISCATAWAY, N.J, US, vol. 32, no. 9, 1 September 1994 (1994-09-01), pages 50-57, XP000476555 ISSN: 0163-6804

## Description

The present invention generally relates to an apparatus and method for transferring packets switched among a plurality of network segments, particularly to an apparatus and method for transferring packets with a function of monitoring malicious packets.

In order to switch packets among a plurality of network segments (simply denoted as segments), for example, a packet transfer apparatus (packet relay apparatus) such as a router is generally provided on a computer network.

Recently, a packet transfer apparatus with a function of preventing transfer of malicious (illicit) packets has been proposed (for example, described in U.S. Patent Application Publication No. US2002/0027907 A1, published on Mar. 7, 2002). Specifically, it is a packet transfer apparatus including a filter type IDS (intrusion detection system). The filter type IDS has a function of detecting malicious packets including information which causes malfunction of a software of a server or the like included in a segment at a packet reception side.

The packet transfer apparatus described above is applied to a network (for example, LAN) configured with the same network address space, specifically the same subnet. In other words, network segments to which the packet transfer apparatus is connected all require to belong to the same network address space. Similar systems have been proposed, such as in WO 01/06726 A2 published on 25.01.2001 or US Patent Nr. 5,835,726 of 10.11.1998.

However, in some cases, the packet transfer apparatus having a function of preventing transfer of malicious packets is provided not only in a single network address space but also on a boundary between an external network and an internal network. In this case, generally, the external network and the internal network belong to different network address spaces, respectively.

A device for network address portability is disclosed in WO 99/38303 A2, published on 29.07.1999.)

In order to apply the packet transfer apparatus having a function of preventing transfer of malicious packets among segments which belong to different network address spaces, respectively, a segment connection unit (so-called router) for enabling to connect segments is required. Therefore, a system configured in a combination of the packet transfer apparatus having a function of preventing transfer of malicious packets and the segment connection unit is provided on the boundary between the external network and the internal network, or the like. However, such a system is made complicated in the configuration so that practical use is not easy.

It is an object of the present invention to provide a packet transfer apparatus which can be realized with a simple configuration, and has functions of switching packets among segments which belong to different network address spaces, and preventing transfer of malicious packets.

Accordingly the present invention provides an apparatus for transferring packets among network segments in a network, comprising: means for receiving a packet transmitted from a transmitting source network segment; means for determining whether or not the packet received in the receiving means is a normal packet; means for deciding a transmitting destination network segment of a packet which has been identified as normal by the determining means using routing table information; MAC address rewrite means for rewriting a MAC address of the normal packet to a MAC address present on the transmitting destination network segment; and means for transmitting the normal packet with its rewritten MAC address to the corresponding transmitting destination network segment, characterised by further comprising: network address rewrite means including a table indicating correspondence between a destination service number of the packet received in the receiving means and a destination network address after rewrite, for rewriting the network address of the packet to a destination network address corresponding to a destination service number of the packet with reference to the correspondence table information before rewrite of the MAC address by the MAC address rewrite means.

The invention also extends to a method of transferring packets among network segments in a network, comprising the steps of: receiving a packet transmitted from a transmitting source network segment; determining whether or not the packet received in the receiving step is a normal packet; deciding a transmitting destination network segment of a packet which has been identified as normal by the determining step, using routing table information; rewriting the MAC address of the normal packet to a MAC address present on the transmitting destination network segment; and transmitting the normal packet with its rewritten MAC address to the transmitting destination network segment decided by the deciding step, characterised by the further steps of: using correspondence table information indicating correspondence between a destination service number of the packet received in the receiving step and a destination network address after rewrite, and rewriting the network address of the packet to a destination network address corresponding to a destination service number of the packet with reference to the correspondence table information before rewrite of the MAC address by the MAC address rewrite step.

The invention can be more fully understood from the following detailed description when taken in conjunction with the accompanying drawings, in which:
Fig. 1 is a block diagram showing essential parts of a packet transfer apparatus according to a first embodiment of the present invention;
Fig. 2 is a block diagram showing a configuration of a segment decision unit according to the first to fourth embodiments of the present invention;
Fig. 3 is a diagram showing one example of a routing table included in the segment determination unit;
Fig 4. is a flow chart for explaining operations of the first embodiment;
Fig. 5 is a block diagram showing essential parts of a packet transfer apparatus according to the second embodiment;
Fig. 6 is a block diagram showing essential parts of a packet transfer apparatus according to the third embodiment;
Figs. 7 to 9 are diagrams showing examples of a correspondence table according to the third and fourth embodiments; and
Fig. 10 is a block diagram showing essential parts of a packet transfer apparatus according to the fourth embodiment.

Hereinafter, embodiments according to the present invention will be described with reference to the drawings.

### (First embodiment)

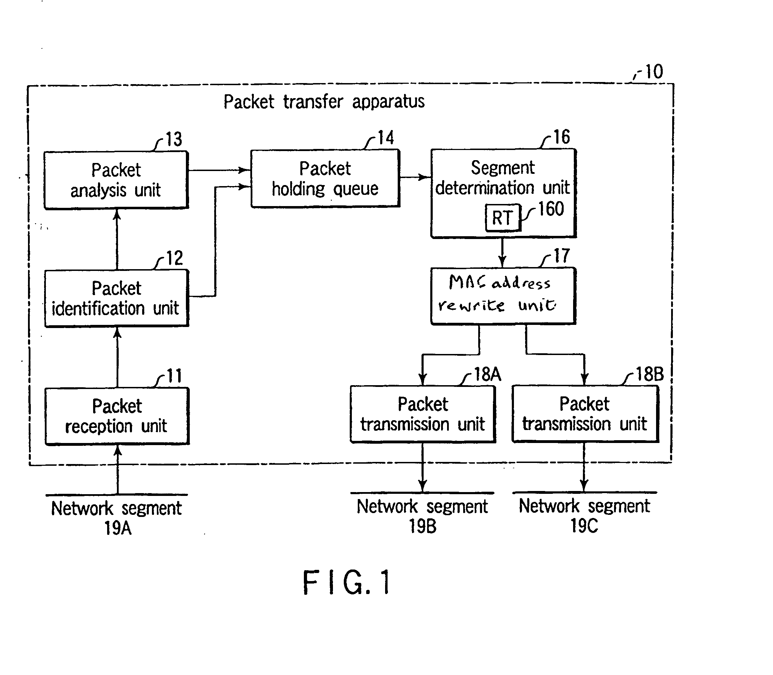

FIG. 1 is a block diagram showing essential parts of a packet transfer apparatus according to a first embodiment.

The packet transfer apparatus 10 comprises a packet reception unit 11, a packet identification unit 12, a packet analysis unit 13, a packet holding queue 14, a segment determination unit 16, a MAC address rewrite unit 17, and a plurality of packet transmission units 18A and 18B.

The packet reception unit 11 receives a packet transferred from a network segment 19A among a plurality of network segments. The packet identification unit 12 adds an identifier for identifying the packet to the packet received in the packet reception unit 11, and outputs it to the packet holding queue 14 and the packet analysis unit 13.

The packet analysis unit 13 analyzes whether or not the packet received in the packet reception unit 11 is an malicious packet. Specifically, the packet analysis unit 13 determines whether or not information of the packet includes information which causes malfunction of a software of a server or the like connected to a transmitting destination network segment 19B or 19C. In other words, the packet analysis unit 13 corresponds to a system for detecting the malicious packet. The system is included in the above filter type IDS (intrusion detection system) for preventing transfer of malicious packets.

The packet holding queue 14 is a FIFO buffer memory for temporarily holding the packet added with the identifier by the packet identification unit 12. The packet holding queue 14 holds the packet until the analysis processing of the packet analysis unit 13 is completed. Here, the packet holding queue 14 is directed for being commonly used for the respective network segments 19B and 19C which are transmitting destinations of packets.

The segment determination unit 16 fetches the packet which has not been discarded as an malicious packet from the packet holding queue 14, and transfers it via the MAC address rewrite unit 17 to the packet transmission units 18A and 18B. In this case, the segment determination unit 16 decides a transmitting destination network segment from a destination network address of the packet with reference to a routing table 160 described later.

The MAC address rewrite unit 17 rewrites a MAC (media access control) address of the received packet to a MAC address of a device (server or the like) having the destination network address on the transmitting destination network segment. The packet transmission unit 18A or 18B transmits the packet whose MAC address has been rewritten to the network segment 19B or 19C.

### (Routing table)

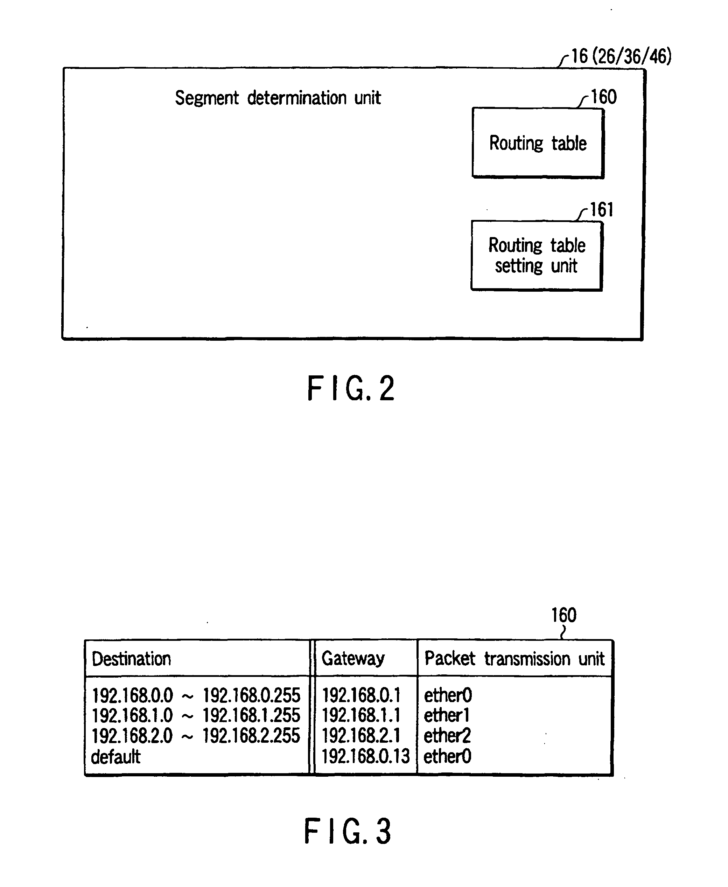

The segment determination unit 16 has the routing table 160 and a routing table setting unit 161 as shown in FIG. 2. The routing table 160 is configured with table information where destination network address spaces, Gateway network addresses for accessing the network address spaces, and names of the packet transmission units connected to the transmitting destination network segments are corresponded, respectively.

### (Packet transfer operation)

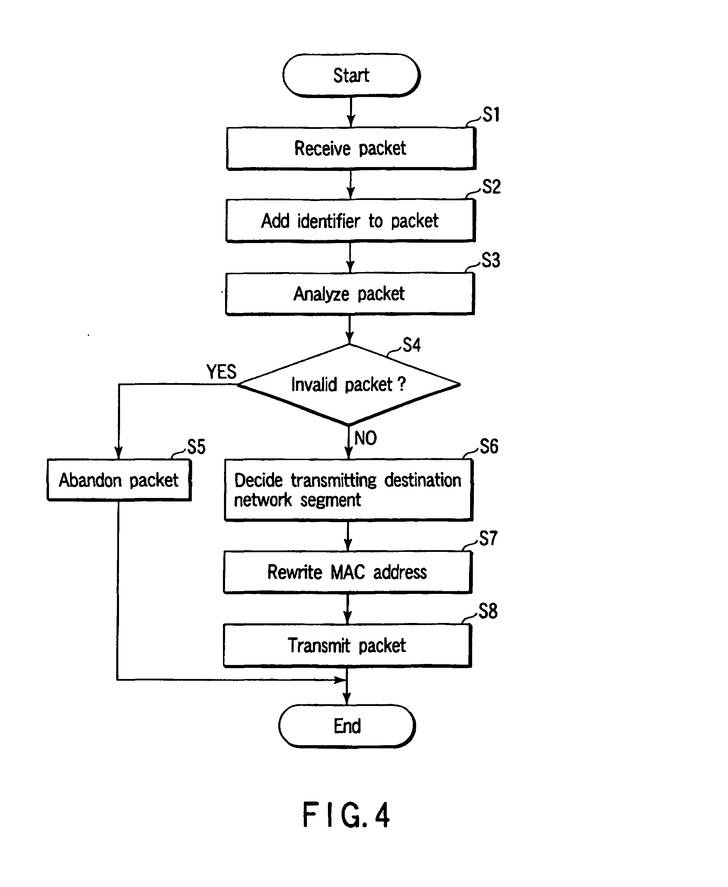

Hereinafter, operations of the first embodiment will be described mainly referring to a flow chart of FIG. 4.

The segment determination unit 16 of the packet transfer apparatus 10 has the routing table 160 shown in FIG. 3, as described above.

The packet reception unit 11 receives a packet transferred on the network segment 19A (step S1). Here, the packet received in the packet reception unit 11 (received packet) is assumed to be a packet whose destination is a server having, for example, a network address "192. 168. 1. 10."

The received packet is added with an identifier by the packet identification unit 12 to be stored in the packet holding queue 14 (step S2). The packet stored in the packet holding queue 14 is simultaneously transmitted to the packet analysis unit 13.

The packet analysis unit 13 analyzes whether or not the received packet is an malicious packet (step S3). When it is determined by the packet analysis unit 13 that the received packet is an malicious packet, the packet transfer apparatus 10 discards the packet stored in the packet holding queue 14 to terminate the packet transfer processing (YES in step S4, S5). On the other hand, when it is determined that the packet is not an malicious packet but a normal packet, the packet is transferred from the packet holding queue 14 to the segment determination unit 16 (NO in step S4).

The segment determination unit 16 decides the transmitting destination network segment (here, 19B) of the packet with reference to the routing table 160 shown in FIG. 3 (step S6). Specifically, the segment determination unit 16 recognizes that the name of the packet transmission unit connected to the transmitting destination network segment is "ether1." Here, the Gateway network address is "192. 168. 1. 1."

The MAC address rewrite unit 17 rewrites the MAC address of the received packet to the MAC address of the server having the destination network address "192. 168. 1. 10" on the transmitting destination network segment determined by the segment determination unit 16 (step S7). The packet transmission unit 18A decided by the segment determination unit 16 transmits the packet to the network segment 19B (step S8). The packet transmission unit 18A has the packet transmission unit name "ether1", and is connected to the network segment 19B including the server having the destination network address "192. 168. 1. 10."

As described above, even when the respective network segments (19A to 19B) connected belong to different network address spaces, respectively, the packet transfer apparatus 10 can perform the packet transfer between the network segments. Further, the packet transfer apparatus 10 can prevent transfer of malicious packets having information which includes the cause of malfunction of a software of a server or the like included in the transmitting destination network segment.

In other words, the packet transfer apparatus having a function of preventing transfer of malicious packets (filter type IDS function) can be realized with a simple system configuration without requiring a segment connection unit (so-called router) for enabling to connect segments. Particularly, the packet transfer apparatus is useful as a packet relay apparatus which is provided at a boundary between an external network and an internal network, or the like.

### (Second embodiment)

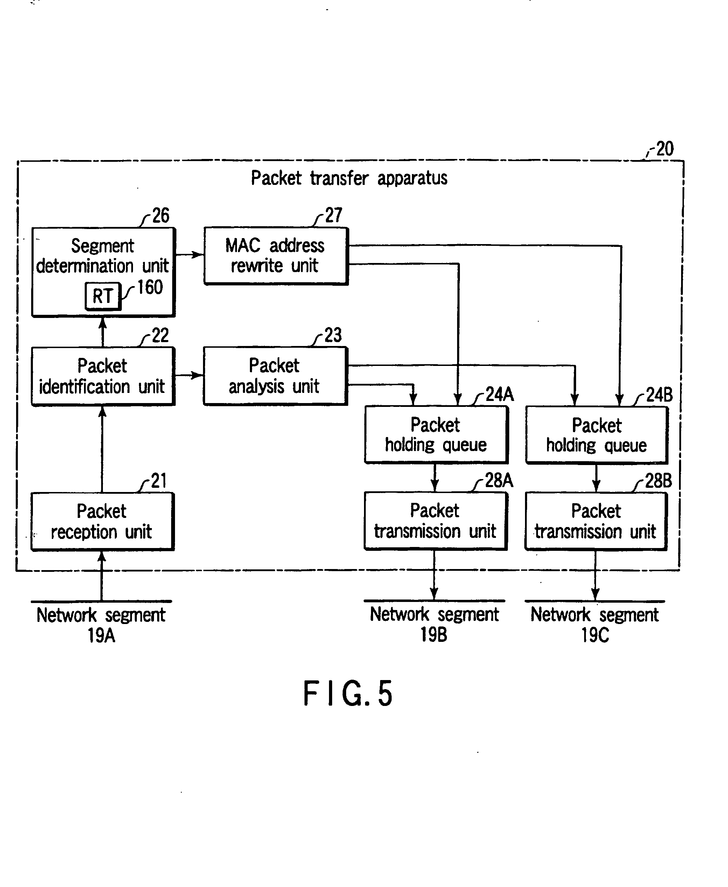

FIG. 5 is a block diagram showing essential parts of a packet transfer apparatus according to a second embodiment. The present embodiment relates to a packet transfer apparatus 20 having a plurality of packet holding queues 24A and 24B respectively corresponding to the network segments 19B and 19C.

The packet transfer apparatus 20 comprises a packet reception unit 21, a packet identification unit 22, a packet analysis unit 23, a segment determination unit 26, and a MAC address rewrite unit 27 as shown in FIG. 5 as with the first embodiment.

Further, the packet transfer apparatus 20 comprises a plurality of packet holding queues 24A and 24B, and packet transmission units 28A and 28B in correspondence to the two-system network segments 19B and 19C.

The segment determination unit 26 has the routing table 160 and the routing table setting unit 161 as shown in FIG. 2. The segment determination unit 26 decides a transmitting destination network segment from the destination network address of the packet with respect to the packet added with an identifier by the packet identification unit 22 with reference to the routing table 160. Further, the segment determination unit 26 stores the packet which has not been discarded as an malicious packet in the packet holding queue 24A or 24B corresponding to the transmitting destination network segment 19B or 19C via the MAC address rewrite unit 27.

The MAC address rewrite unit 27 rewrites a MAC address of the received packet to a MAC address of a device (server or the like) having the destination network address on the transmitting destination network segment 19B or 19C.

The packet holding queues 24A and 24B temporarily hold the packet stored by the segment determination unit 26 until the analysis processing of the packet analysis unit 23 is completed. The packet transmission unit 28A or 28B fetches the packet which is decided to be normal by the packet analysis unit 23, not an malicious packet, from the packet holding queue 24A or 24B, and transmits it to the transmitting destination network segment 19B or 19C.

Hereinafter, operations of the packet transfer apparatus 20 according to the second embodiment will be described. Description of the same operations as those of the first embodiment will be omitted.

The segment determination unit 26 of the packet transfer apparatus 20 is assumed to have the routing table 160 as shown in FIG. 3. The packet reception unit 21 receives a packet transferred from the network segment 19A. The packet is assumed to be a packet whose destination is a server having, for example, a network address "192. 168. 1. 10."

The packet identification unit 22 adds an identifier to the received packet, and transfers it to the segment determination unit 26. The segment determination unit 26 determines with reference to the routing table 160 that the name of the packet transmission unit which transmits the packet is "ether1."

Further, the MAC address rewrite unit 27 rewrites the MAC address of the received packet to the MAC address of the server having the destination network address "192. 168. 1. 10" on the transmitting destination network segment determined by the segment determination unit 26. The MAC address rewrite unit 27 stores the packet in the packet holding queue 24A corresponding to the packet transmission unit 28A decided by the segment determination unit 26. The packet transmission unit 28A has the packet transmission unit name "ether1", and is connected to the network segment 19B including the server having the destination network address "192. 168. 1. 10."

On the other hand, the packet analysis unit 23 analyzes whether or not the packet stored in the packet holding queue 24A is an malicious packet. When it is determined by the packet analysis unit 23 that the packet is an malicious packet, the packet transfer apparatus 20 discards the packet stored in the packet holding queue 24A to terminate the packet transfer processing.

Further, when it is determined that the packet is not an malicious packet but a normal packet, the packet transmission unit 28A fetches the packet from the packet holding queue 24A, and transmits it to the network segment 19B.

Here, it is assumed that the segment determination unit 26 determines the transmitting destination network segment 19C of the packet with reference to the routing table 160. In this case, the packet transmission unit 28B fetches the packet from the packet holding queue 24B, and transmits it to the network segment 19C.

As described above, the packet transfer among network segments which belong to different network address spaces can be performed also in the packet transfer apparatus 20 according to the second embodiment as with the first embodiment. Further, the packet transfer apparatus having a function of preventing transfer of malicious packets (filter type IDS function) can be realized with a simple system configuration.

### (Third embodiment)

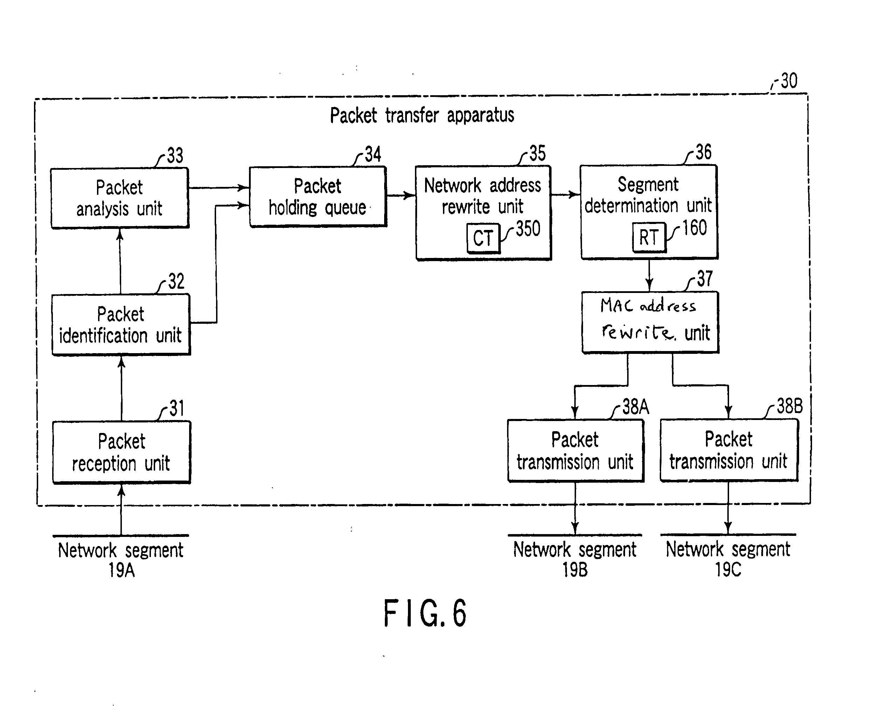

FIG. 6 is a block diagram showing essential parts of a packet transfer apparatus according to a third embodiment. The present embodiment relates to a packet transfer apparatus 30 having a network address rewrite unit 35 with a correspondence table 350 for rewriting a network address at the front stage of a segment determination unit 36.

The packet transfer apparatus 30 comprises a packet reception unit 31, a packet identification unit 32, a packet analysis unit 33, a packet holding queue 34, the network address rewrite unit 35, the segment determination unit 36, a MAC address rewrite unit 37, and a plurality of packet transmission units 38A and 38B.

The packet holding queue 34 temporarily holds a packet added with an identifier by the packet identification unit 32 until the analysis processing of the packet analysis unit 33 is completed.

The network address rewrite unit 35 includes the correspondence table 350 for rewriting a network address, and changes the network address of the packet which has not been discarded as an malicious packet by the packet analysis unit 33.

The segment determination unit 36 has the routing table 160 and the routing table setting unit 161 as shown in FIG. 2. The segment determination unit 36 decides the transmitting destination network segment from the destination network address of the packet with reference to the routing table 160. The segment determination unit 36 fetches the packet which has not been discarded as an malicious packet from the packet holding queue 34, and transfers it via the MAC address rewrite unit 37 to the packet transmission units 38A and 38B.

The MAC address rewrite unit 37 rewrites the MAC address of the received packet to the MAC address of a device (server or the like) having the destination network address on the transmitting destination network segment. The packet transmission unit 38A or 38B transmits the packet whose MAC address has been rewritten by the MAC address rewrite 37 to the transmitting destination network segment 19B or 19C.

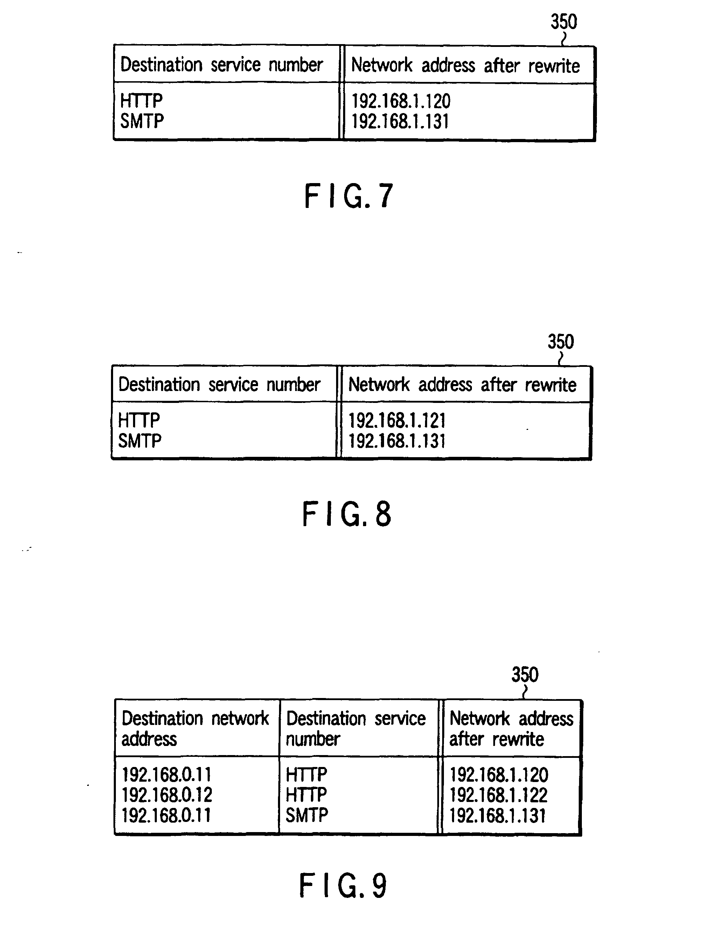

The correspondence table 350 included in the network address rewrite unit 35 is table information where destination service numbers (here, HTTP, SMTP) and network addresses after rewrite (here, "192. 168. 1. 120" and "192. 168. 1. 131") are corresponded as shown in FIG. 7.

FIG. 8 shows an example of contents after a failure occurs in the HTTP server in the correspondence table 350. In other words, it is found that, in the HTTP access of the correspondence table 350, an address for rewriting the destination of the packet is corrected to an address of an alternative server "192. 168. 1. 121."

FIG. 9 shows one example of the correspondence table 350 configured as the table information where the destination network addresses, the destination service numbers, and the network addresses after rewrite are corresponded, respectively.

Hereinafter, operations of the packet transfer apparatus 30 according to the third embodiment will be described. Description of the same operations as those of the first embodiment described above will be omitted.

In the packet transfer apparatus 30, the segment determination unit 36 has the routing table 160 as shown in FIG. 3. Further, the network address rewrite unit 35 is assumed to have the correspondence table 350 as shown in FIG. 7.

The packet reception unit 31 receives a packet transferred on the network segment 19A. The received packet is assumed to be a packet whose destination is a server having, for example, a network address "192. 168. 0. 1" and whose destination service number is "HTTP."

The packet identification unit 32 adds an identifier to the packet received in the packet reception unit 31, and stores it in the packet holding queue 34. The packet stored in the packet holding queue 34 is simultaneously transmitted to the packet analysis unit 33, where it is analyzed whether or not the packet is an malicious packet.

When it is decided by the packet analysis unit 33 that the packet is an malicious packet, the packet transfer apparatus 30 discards the packet stored in the packet holding queue 24A, and terminates the packet transfer processing. Further, when it is decided that the packet is not an malicious packet but a normal packet, the packet is transferred to the network address rewrite unit 35.

The network address rewrite unit 35 rewrites the destination network address of the packet to "192. 168. 1. 120" which is the HTTP service number with reference to the correspondence table 350 shown in FIG. 7, and transfers it to the segment determination unit 36.

The segment determination unit 36 determines, with reference to the routing table 160 shown in FIG. 3, that the name of the packet transmission unit which transmits the packet is "ether1" Next, the MAC address rewrite unit 37 rewrites the MAC address of the received packet to the MAC address of the server having the destination network address "192. 168. 1. 120", and transmits it to the packet transmission unit 38A of "ether1." The packet transmission unit 38A transmits the packet whose MAC address has been rewritten by the MAC address rewrite unit 37 to the transmitting destination network segment 19B.

Next, it is assumed that a failure occurs in the server having, for example, the network address "192. 168. 1. 120." In order to cope with this failure, the network address rewrite unit 35 rewrites the correspondence table 350 as shown in FIG. 8. This rewrite can be performed by a serial interface, a network interface of the network address rewrite unit 35 itself, or an update instruction of the correspondence table from the network interface to be transferred.

Here, as with before the failure occurs, it is assumed that a packet whose destination network address is the network address "192. 168. 0. 1" of the apparatus and whose destination service number is "HTTP" is received.

The network address rewrite unit 35 rewrites the destination network address of the packet to the network address "192. 168. 1. 121" of the alternative server with reference to the correspondence table 350 shown in FIG. 7, and transfers it to the segment determination unit 36.

The segment determination unit 36 determines, with reference to the routing table 160 shown in FIG. 3, that the name of the packet transmission unit which transmits the packet is "ether1" (not changed in this case). Next, the MAC address rewrite unit 37 rewrites the MAC address of the packet to the MAC address of the alternative server having the destination network address "192. 168. 1. 121", and transmits it to the packet transmission unit 38A of "ether1." The packet transmission unit 38A transmits the packet whose MAC address has been rewritten by the MAC address rewrite unit 37 to the transmitting destination network segment 19B.

As described above, when the server designated as a destination and the like cannot continue the service due to failure occurrence and the like, it is possible to realize the packet transfer apparatus 30 which is easy to transfer packets to the alternative server. Further, as with the first embodiment, even when the network segments to which the packet transfer apparatus 30 is connected belong to different network address spaces, respectively, it is possible to realize the packet transfer apparatus having the filter type IDS function capable of performing packet transfer and preventing transfer of malicious packets.

The correspondence table 350 provided in the network address rewrite unit 35 may have the destination network addresses as shown in FIG. 9. In this case, a target of the network address rewrite is a packet having the destination network address stored in the correspondence table 350 as shown in FIG. 9. For example, the packet having "192. 168. 0. 11" as the destination network address and "HTTP" as the destination service number is rewritten to the packet whose destination network address is "192. 168. 1. 120" by the network address rewrite unit 35.

### (Fourth embodiment)

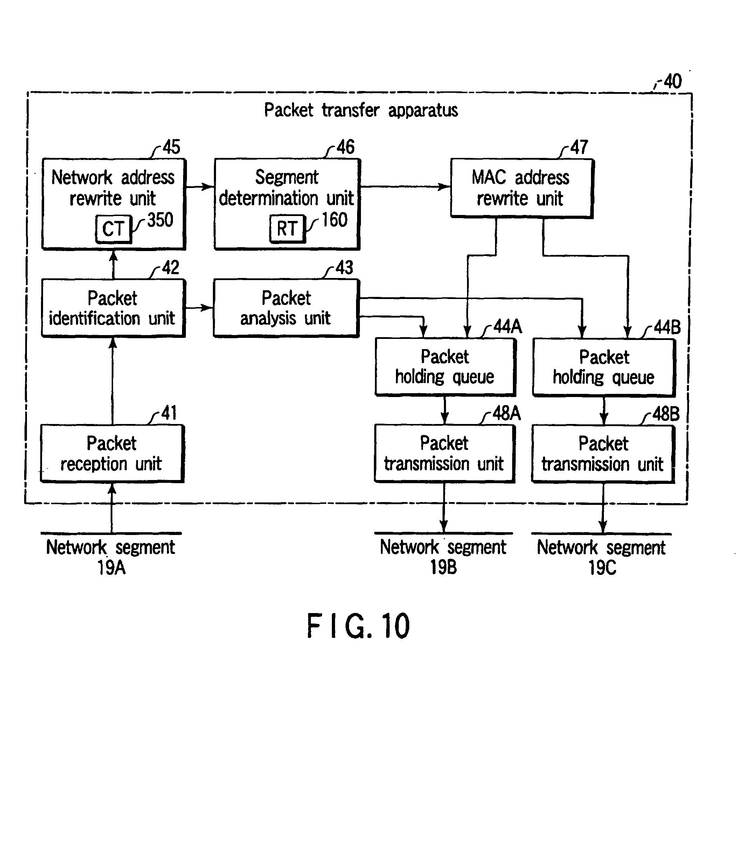

FIG. 10 is a block diagram showing essential parts of a packet transfer apparatus 40 according to a fourth embodiment. The present embodiment relates to the packet transfer apparatus 40 having a network address rewrite unit 45 including the correspondence table 350 at the front stage of a segment determination unit 46. Further, the packet transfer apparatus 40 comprises a plurality of packet holding queues 48A and 48B corresponding to a plurality of network segments 19B and 19C, respectively.

The packet transfer apparatus 40 comprises a packet reception unit 41, a packet identification unit 42, a packet analysis unit 43, the network address rewrite unit 45, the segment determination unit 46, and a MAC address rewrite unit 47 as shown in FIG. 10.

Further, the packet transfer apparatus 40 comprises a plurality of packet holding queues 44A and 44B and packet transmission units 48A and 48B in correspondence to the two-system network segments 19B and 19C.

The network address rewrite unit 45 changes a network address of a packet added with an identifier by the packet identification unit 42 with reference to the correspondence table 350. The segment determination unit 46 has the routing table 160 and the routing table setting unit 161 as shown in FIG. 2. With respect to a packet which has been subjected to an address conversion processing by the network address rewrite unit 45, the segment determination unit 46 determines a transmitting destination network segment from the destination network address of the packet with reference to the routing table 160. Further, the segment determination unit 46 stores the packet via the MAC address rewrite unit 47 in the packet holding queue 44A or 44B corresponding to the transmitting destination network segment 19B or 19C.

The MAC address rewrite unit 47 rewrites the MAC address of the received packet to the MAC address of a destination device (server or the like) connected onto the transmitting destination network segment. The packet holding queues 44A and 44B temporarily hold the packet processed by the segment determination unit 46 until the analysis processing of the packet analysis unit 43 is completed.

When it is determined by the packet analysis unit 43 that the packet is not an malicious packet but a normal packet, the packet transmission units 48A and 48B fetch the packet from the packet holding queues 44A and 44B and transmit it to the network segments 19B and 19C, respectively.

Hereinafter, operations of the packet transfer apparatus 40 according to the fourth embodiment will be described.

In the packet transfer apparatus 40, the segment determination unit 46 has the routing table 160 as shown in FIG. 3. The network address rewrite unit 45 is assumed to have the correspondence table 350 as shown in FIG. 7.

The packet reception unit 41 receives a packet transferred on the network segment 19A. Here, it is assumed that the packet reception unit 41 receives the packet whose destination network address is the network address "192. 168. 0. 1" of the apparatus and whose destination service number is "HTTP."

The packet received in the packet reception unit 41 is added with an identifier by the packet identification unit 42, and transferred to the network address rewrite unit 45.

The network address rewrite unit 45 rewrites the destination network address of the packet to "192. 168. 1. 120" with reference to the correspondence table 350 in FIG. 7, and transfers the packet to the segment determination unit 46.

The segment determination unit 46 decides, with reference to the routing table 160 shown in FIG. 3, that the packet is the HTTP packet. Further, the segment determination unit 46 determines that the name of the packet transmission unit which transmits the packet is "ether1."

Next, the MAC address rewrite unit 47 rewrites the MAC address of the packet to the MAC address of the server having the destination network address "192. 168. 1. 120", and stores it in the packet holding queue 44A corresponding to the packet transmission unit 48A.

The packet analysis unit 43 determines whether or not the packet stored in the packet holding queue 44A is an malicious packet. Here, when it is decided that the packet is an malicious packet, the packet transfer apparatus 40 discards the packet stored in the packet holding queue 44A, and terminates the packet transfer processing.

Further, it is decided that the packet is not an malicious packet but a normal packet, the packet is transmitted to the packet transmission unit 48A of "ether1" corresponding to the packet holding queue 44A in which the packet has been stored. The packet transmission unit 48A transmits the packet to the network segment 19B.

As described above, also in the packet transfer apparatus 40 according to the fourth embodiment, the packet transfer among segments which belong to different network address spaces can be realized. Further, it is possible to realize the packet transfer having the filter type IDS function for preventing transfer of malicious packets.

According to the first to fourth embodiments, it is possible to provide the packet transfer apparatus having functions of transferring packets among a plurality of network segments which belong to different network addresses, and preventing transfer of malicious packets without requiring the complicated system.

## Claims

1. An apparatus for transferring packets among network segments in a network, comprising:
means (31) for receiving a packet transmitted from a transmitting source network segment;
means (33) for determining whether or not the packet received in the receiving means is a normal packet; and
means (36) for deciding a transmitting destination network segment of a packet which has been identified as normal by the determining means using routing table information (160),
**characterised by** further comprising:
MAC address rewrite means (37) for rewriting a MAC address of the normal packet to a MAC address present on the transmitting destination network segment;
network address rewrite means (35) including a table (350) indicating correspondence between a destination service number of the packet received in the receiving means (31) and a destination network address after rewrite, for rewriting the network address of the packet to a destination network address corresponding to a destination service number of the packet with reference to the correspondence table information (350) before rewrite of the MAC address by the MAC address rewrite means (37); and
means (38A, 38B) for transmitting the normal packet with its rewritten MAC address to the corresponding transmitting destination network segment.

2. Apparatus according to claim 1, further **characterised in that** the correspondence table information (350) includes information indicating correspondence between a destination network address of the packet, a destination service number and a destination network address after rewrite.

3. Apparatus according to claim 1 or claim 2, **characterised by** further comprising:
packet holding means (34) for temporarily holding the packet received in the receiving means (31),
wherein the transmitting means (38A, 38B) fetches the packet which has been determined to be normal by the determining means (33) and whose MAC address has been rewritten by the MAC address rewrite means (37) from the packet holding means (34) and transmits the packet to the transmitting destination network segment.

4. Apparatus according to anyone of the preceding claims, **characterised in that** the determining means (33) includes packet analysis means for analysing whether or not information included in the packet received in the receiving means (31) includes a cause for malfunction of a software of a device connected to the transmitting destination network segment, and determining whether or not the packet is a normal packet.

5. Apparatus according to any one of the preceding claims, **characterised in that** the routing table information (160) includes table information where an address space to which a destination network address of the packet belongs and a transmitting destination network segment are corresponded.

6. Apparatus according to any one of the preceding claims, further
**characterised by**:
a plurality of packet holding means (44A, 44B) provided in correspondence to the respective transmitting destination network segments for temporarily holding the packet received in the receiving means (41),
wherein the transmitting means (48A, 48B) fetches the normal packet with its rewritten MAC address from corresponding packet holding means, and transmits the packet to the transmitting destination network segment.

7. A method of transferring packets among network segments in a network, comprising the steps of:
receiving a packet transmitted from a transmitting source network segment;
determining whether or not the packet received in the receiving step is a normal packet; and
deciding a transmitting destination network segment of a packet which has been identified as normal by the determining step, using routing table information (160),
**characterised by** the further steps of:
rewriting the MAC address of the normal packet to a MAC address present on the transmitting destination network segment;
using correspondence table information (350) indicating correspondence between a destination service number of the packet received in the receiving step and a destination network address after rewrite;
rewriting the network address of the packet to a destination network address corresponding to a destination service number of the packet with reference to the correspondence table information (350) before rewrite of the MAC address by the MAC address rewrite step; and
transmitting the normal packet with its rewritten MAC address to the transmitting destination network segment decided by the deciding step.

8. A method according to claim 7, further comprising the step of:
temporarily holding the packet received in the receiving step,
wherein the transmitting step fetches the normal packet with its rewritten MAC address from the holding step, and transmits the packet to the transmitting destination network segment.

9. A method according to claim 7 or claim 8, **characterised in that** the determining step analyses whether or not information included in the packet received in the receiving step includes a cause of malfunction of a software of a device connected to the transmitting destination network segment, and performs a packet analysis processing for determining whether or not the packet is normal.

10. A method according to any one of claims 7 to 9, **characterised in that** the routing table information (160) includes table information indicating the correspondence between an address space to which a destination network segment of the packet belongs, and a transmitting destination network segment.

11. A method according to claim 7, **characterised by** further comprising the step of:
holding the packets received in the receiving step in correspondence to the respective transmitting destination network segments,
wherein the transmitting step fetches the packet which has been identified as normal and whose MAC address has been rewritten by the MAC address rewrite step among the packets held in the holding step and transmits the packet to the transmitting destination network segment decided by the deciding step.

12. A computer-readable storage medium used in an apparatus for transferring packets among network segments, the storage medium comprising:
means for causing a computer to receive a packet transmitted from a transmitting source network segment,
means for causing a computer to determine whether or not the packet received in the receiving means is a normal packet; and
means for causing a computer to decide a transmitting destination network segment of the packet which has been determined to be normal by the determining computer using routing table information,
**characterised by** further comprising:
means for causing a computer to rewrite a MAC address of the packet which has been identified as normal determining computer to a MAC address present on the transmitting destination network segment;
means for causing a computer to use correspondence table information (350) indicating correspondence between a destination service number of the packet received in the receiving means and a destination network address after rewrite;
means for causing a computer to rewrite the network address of the packet to a destination network address corresponding to a destination service number of the packet in accordance with the correspondence table information (350) before rewrite of a MAC address by the MAC address rewrite means; and
means for causing a computer to transmit the normal packet, with its rewritten MAC address, to the transmitting destination network segment decided by the deciding computer.

13. The computer-readable storage medium according to claim 12, **characterised in that** the determining computer analyses whether or not information included in the packet received in the receiving computer includes a possible cause of malfunction of a software of a device connected to the transmitting destination network segment, and performs a packet analysis processing for determining whether or not the packet is a normal packet.

## Patentansprüche

1. Vorrichtung zum Übertragen von Paketen zwischen Netzwerksegmenten in einem Netzwerk, mit:
einem Mittel (31) zum Empfangen eines Pakets, das von einem Sendequellen-Netzwerksegment gesendet wird;
einem Mittel (33) zum Feststellen, ob das in dem Empfangsmittel empfangene Paket ein normales Paket ist oder nicht; und
einem Mittel (36) zum Bestimmen eines Sendeziel-Netzwerksegments eines Pakets, das durch das Feststellungsmittel unter Verwendung von Vermittlungstabelleninformation (160) als normal identifiziert wurde;
außerdem **gekennzeichnet durch**:
ein MAC-Adressen-Neuschreibmittel (37) zum Neuschreiben einer MAC-Adresse des normalen Pakets zu einer MAC-Adresse, die sich auf dem Sendeziel-Netzwerksegment befindet;
ein Netzwerkadressen-Neuschreibmittel (35) mit einer Tabelle (350), die eine Entsprechung zwischen einer Ziel-Servicenummer des in dem Empfangsmittel (31) empfangenen Pakets und einer Ziel-Netzwerkadresse nach dem Neuschreiben angibt, zum Neuschreiben der Netzwerkadresse des Pakets zu einer Ziel-Netzwerkadresse, die einer Ziel-Servicenummer des Pakets entspricht, unter Bezugnahme auf die Entsprechungstabelleninformation (350), vor dem Neuschreiben der MAC-Adresse **durch** das MAC-Adressen-Neuschreibmittel (37); und
ein Mittel (38A, 38B) zum Senden des normalen Pakets mit seiner neugeschriebenen MAC-Adresse zu dem entsprechenden Sendeziel-Netzwerksegment.

2. Vorrichtung nach Anspruch 1, außerdem **dadurch gekennzeichnet, dass** die Entsprechungstabelleninformation (350) eine Information enthält, die eine Entsprechung zwischen einer Ziel-Netzwerkadresse des Pakets, einer Ziel-Servicenummer und einer Ziel-Netzwerkadresse nach dem Neuschreiben angibt.

3. Vorrichtung nach Anspruch 1 oder nach Anspruch 2, außerdem **gekennzeichnet durch**:
ein Pakethaltemittel (34), um das in dem Empfangsmittel (31) empfangene Paket temporär zu halten;
wobei das Sendemittel (38A, 38B) ein Paket, bezüglich dessen **durch** das Feststellungsmittel (33) festgestellt wurde, dass es normal ist, und dessen MAC-Adresse **durch** das MAC-Adressen-Neuschreibmittel (37) neu geschrieben wurde, von dem Pakethaltemittel (34) abruft und das Paket zu dem Sendeziel-Netzwerksegment sendet.

4. Vorrichtung nach einem der vorhergehenden Ansprüche, **dadurch gekennzeichnet, dass** das Feststellungsmittel (33) ein Paketanalysemittel enthält, um zu analysieren, ob die in dem in dem Empfangsmittel (31) empfangenen Paket enthaltene Information eine Ursache für eine Fehlfunktion einer Software einer Einrichtung enthält oder nicht, die mit dem Sendeziel-Netzwerksegment verbunden ist, und um festzustellen, ob das Paket ein normales Paket ist oder nicht.

5. Vorrichtung nach einem der vorhergehenden Ansprüche, **dadurch gekennzeichnet, dass** die Vermittlungstabelleninformation (160) eine Tabelleninformation enthält, wo sich ein Adressraum, zu dem eine Ziel-Netzwerkadresse des Pakets gehört, und ein Sendeziel-Netzwerksegment entsprechen.

6. Vorrichtung nach einem der vorhergehenden Ansprüche, außerdem **gekennzeichnet durch**:
eine Vielzahl von Pakethaltemitteln (44A, 44B), die entsprechend den jeweiligen Sendeziel-Netzwerksegmenten vorgesehen sind, um das in dem Empfangsmittel (41) empfangene Paket temporär zu halten;
wobei das Sendemittel (48A, 48B) das normale Paket mit seiner neugeschriebenen MAC-Adresse von entsprechenden Pakethaltemitteln abruft und das Paket zu:dem Sendeziel-Netzwerksegment sendet.

7. Verfahren zum Übertragen von Paketen zwischen Netzwerksegmenten in einem Netzwerk, mit den Schritten:
Empfangen eines Pakets, das von einem Sendequellen-Netzwerksegment gesendet wird;
Feststellen, ob das in dem Empfangsschritt empfangene Paket ein normales Paket ist oder nicht; und
Bestimmen eines Sendeziel-Netzwerksegments eines Pakets, das durch den Feststellungsschritt unter Verwendung von Vermittlungstabelleninformation (160) als normal identifiziert wurde;
**gekennzeichnet durch** die weiteren Schritte:
Neuschreiben der MAC-Adresse des normalen Pakets zu einer MAC-Adresse, die sich auf dem Sendeziel-Netzwerksegment befindet;
Verwenden von Entsprechungstabelleninformation (350), die eine Entsprechung zwischen einer Ziel-Servicenummer des in dem Empfangsschritt empfangenen Pakets und einer Ziel-Netzwerkadresse nach dem Neuschreiben angibt;
Neuschreiben der Netzwerkadresse des Pakets zu einer Ziel-Netzwerkadresse, die einer Ziel-Servicenummer des Pakets entspricht, unter Bezugnahme auf die Entsprechungstabelleninformation (350), vor dem Neuschreiben der MAC-Adresse **durch** den MAC-Adressen-Neuschreibschritt; und
Senden des normalen Pakets mit seiner neugeschriebenen MAC-Adresse zu dem Sendeziel-Netzwerksegment, das **durch** den Bestimmungsschritt bestimmt wurde.

8. Verfahren nachdem Anspruch 7, außerdem mit dem Schritt:
temporäres Halten des in dem Empfangsschritt empfangenen Pakets;
wobei der Sendeschritt das normale Paket mit seiner neugeschriebenen MAC-Adresse von dem Halteschritt abruft und das Paket zu dem Sendeziel-Netzwerksegment sendet.

9. Verfahren nach Anspruch 7 oder Anspruch 8, **dadurch gekennzeichnet, dass** der Feststellungsschritt analysiert, ob die in dem in dem Empfangsschritt empfangenen Paket enthaltene Information eine Ursache für eine Fehlfunktion einer Software einer Einrichtung enthält oder nicht, die mit dem Sendeziel-Netzwerksegment verbunden ist, und eine Paketanalyseverarbeitung durchführt, um festzustellen, ob das Paket normal ist oder nicht.

10. Verfahren nach einem der Ansprüche 7 bis 9, **dadurch gekennzeichnet, dass** die Vermittlungstabelleninformation (160) eine Tabelleninformation enthält, die die Entsprechung zwischen einem Adressraum, zu dem ein Ziel-Netzwerksegment des Pakets gehört, und einem Sendeziel-Netzwerksegment angibt.

11. Verfahren nach Anspruch 7, **gekennzeichnet durch** den weiteren Schritt:
Halten der in dem Empfangsschritt empfangenen Pakete entsprechend der jeweiligen Sendeziel-Netzwerksegmente;
wobei der Sendeschritt das Paket, das als normal identifiziert ist und dessen MAC-Adresse **durch** den MAC-Adressen-Neuschreibschritt neu geschrieben wurde, unter den Paketen abruft, die in dem Halteschritt gehalten sind, und das Paket zu dem Sendeziel-Netzwerksegment sendet, das **durch** den Bestimmungsschritt bestimmt wurde.

12. Computerlesbares Speichermedium, das in einer Vorrichtung zum Übertragen von Paketen zwischen Netzwerksegmenten verwendet wird, wobei das Speichermedium enthält:
ein Mittel zum Bewirken, dass ein Computer ein Paket empfängt, das von einem Sendequellen-Netzwerksegment gesendet wird;
ein Mittel zum Bewirken, dass ein Computer feststellt, ob das in dem Empfangsmittel empfangene Paket ein normales Paket ist oder nicht; und
ein Mittel zum Bewirken, dass ein Computer ein Sendeziel-Netzwerksegment des Pakets bestimmt, bezüglich dessen durch den feststellenden Computer unter Verwendung von Vermittlungstabelleninformation festgestellt wurde, dass es normal ist;
außerdem **gekennzeichnet durch**:
ein Mittel zum Bewirken, dass ein Computer eine MAC-Adresse des Pakets, das **durch** den feststellenden Computer als normal identifiziert wurde, zu einer MAC-Adresse neuschreibt, die sich auf dem Sendeziel-Netzwerksegment befindet;
ein Mittel zum Bewirken, dass ein Computer eine Entsprechungstabelleninformation (350) verwendet, die eine Entsprechung zwischen einer Ziel-Servicenummer des in dem Empfangsmittel empfangenen Pakets und einer Ziel-Netzwerkadresse nach dem Neuschreiben angibt;
ein Mittel zum Bewirken, dass ein Computer die Netzwerkadresse des Pakets zu einer Ziel-Netzwerkadresse neuschreibt, die einer Ziel-Servicenummer des Pakets entspricht, gemäß der Entsprechungstabelleninformation (350), vor dem Neuschreiben einer MAC-Adresse **durch** das MAC-Adressen-Neuschreibmittel; und
ein Mittel zum Bewirken, dass ein Computer das normale Paket mit seiner neugeschriebenen MAC-Adresse zu dem Sendeziel-Netzwerksegment sendet, das **durch** den bestimmenden Computer bestimmt wurde.

13. Computerlesbares Speichermedium nach Anspruch 12, **dadurch gekennzeichnet, dass** der feststellende Computer analysiert, ob die in dem in dem empfangenen Computer empfangenden Paket enthaltene Information eine mögliche Ursache für eine Fehlfunktion einer Software einer Einrichtung enthält oder nicht, die mit dem Sendeziel-Netzwerksegment verbunden ist, und eine Paketanalyseverarbeitung durchführt, um zu festzustellen, ob das Paket ein normales Paket ist oder nicht.

## Revendications

1. Appareil pour transférer des paquets entre des segments de réseau dans un réseau, comprenant :
un moyen (31) pour recevoir un paquet qui est transmis depuis un segment de réseau de source d'émission ;
un moyen (33) pour déterminer si oui ou non le paquet qui est reçu dans le moyen de réception est un paquet normal ; et
un moyen (36) pour décider d'un segment de réseau de destination d'émission d'un paquet qui a été identifié comme étant normal par le moyen de détermination en utilisant une information de table de routage (160),
**caractérisé en ce qu'**il comprend en outre :
un moyen de réécriture d'adresse MAC (37) pour réécrire une adresse MAC du paquet normal selon une adresse MAC présente sur le segment de réseau de destination d'émission ;
un moyen de réécriture d'adresse de réseau (35) qui inclut une table (350) qui indique une correspondance entre un numéro de service de destination du paquet qui est reçu dans le moyen de réception (31) et une adresse de réseau de destination après réécriture, pour réécrire l'adresse de réseau du paquet selon une adresse de réseau de destination qui correspond à un numéro de service de destination du paquet par référence à l'information de table de correspondance (350) avant réécriture de l'adresse MAC par le moyen de réécriture d'adresse MAC (37) ; et
un moyen (38A, 38B) pour émettre le paquet normal avec son adresse MAC réécrite sur le segment de réseau de destination d'émission correspondant.

2. Appareil selon la revendication 1, **caractérisé en outre en ce que** l'information de table de correspondance (350) inclut une information qui indique une correspondance entre une adresse de réseau de destination du paquet, un numéro de service de destination et une adresse de réseau de destination après réécriture.

3. Appareil selon la revendication 1 ou 2, **caractérisé en ce qu'**il comprend en outre :
un moyen de contenance de paquet (34) pour contenir de façon temporaire le paquet qui est reçu dans le moyen de réception (31),
dans lequel le moyen d'émission (38A, 38B) recherche le paquet qui a été déterminé comme étant normal par le moyen de détermination (33) et dont l'adresse MAC a été réécrite par le moyen de réécriture d'adresse MAC (37) à partir du moyen de contenance de paquet (34) et émet le paquet sur le segment de réseau de destination d'émission.

4. Appareil selon l'une quelconque des revendications précédentes, **caractérisé en ce que** le moyen de détermination (33) inclut un moyen d'analyse de paquet pour analyser si oui ou non une information qui est incluse dans le paquet qui est reçu dans le moyen de réception (31) inclut une cause d'un dysfonctionnement d'un logiciel d'un dispositif qui est connecté au segment de réseau de destination d'émission, et pour déterminer si oui ou non le paquet est un paquet normal.

5. Appareil selon l'une quelconque des revendications précédentes, **caractérisé en ce que** l'information de table de routage (160) inclut une information de table au niveau de laquelle un espace d'adresse auquel une adresse de réseau de destination du paquet appartient et un segment de réseau de destination d'émission sont en correspondance.

6. Appareil selon l'une quelconque des revendications précédentes, **caractérisé en outre par** :
une pluralité de moyens de contenance de paquet (44A, 44B) qui sont prévus en correspondance par rapport aux segments de réseau de destination d'émission respectifs pour contenir de façon temporaire le paquet qui est reçu dans le moyen de réception (41),
dans lequel le moyen d'émission (48A, 48B) recherche le paquet normal avec son adresse MAC réécrite à partir d'un moyen de contenance de paquet correspondant et émet le paquet sur le segment de réseau de destination d'émission.

7. Procédé de transfert de paquets entre des segments de réseau dans un réseau, comprenant les étapes de :
réception d'un paquet qui est émis depuis un segment de réseau de source d'émission ;
détermination de si oui ou non le paquet qui est reçu au niveau de l'étape de réception est un paquet normal ; et
décision d'un segment de réseau de destination d'émission d'un paquet qui a été identifié comme étant normal par l'étape de détermination en utilisant une information de table de routage (160),
**caractérisé par** les étapes supplémentaires de :
réécriture de l'adresse MAC du paquet normal selon une adresse MAC qui est présente sur le segment de réseau de destination d'émission ;
utilisation d'une information de table de correspondance (350) qui indique une correspondance entre un numéro de service de destination du paquet qui est reçu au niveau de l'étape de réception et une adresse de réseau de destination après réécriture ;
réécriture de l'adresse de réseau du paquet selon une adresse de réseau de destination qui correspond à un numéro de service de destination du paquet par référence à l'information de table de correspondance (350) avant réécriture de l'adresse MAC par l'étape de réécriture d'adresse MAC ; et
émission du paquet normal avec son adresse MAC réécrite sur le segment de réseau de destination d'émission qui est décidé au moyen de l'étape de décision.

8. Procédé selon la revendication 7, comprenant en outre l'étape de :
contenance de façon temporaire du paquet qui est reçu au niveau de l'étape de réception,
dans lequel l'étape d'émission recherche le paquet normal avec son adresse MAC réécrite à partir de l'étape de contenance et émet le paquet sur le segment de réseau de destination d'émission.

9. Procédé selon la revendication 7 ou 8, **caractérisé en ce que** l'étape de détermination analyse si oui ou non une information qui est incluse dans le paquet qui est reçu au niveau de l'étape de réception inclut une cause de dysfonctionnement d'un logiciel d'un dispositif qui est connecté au segment de réseau de destination d'émission et réalise un traitement d'analyse de paquet pour déterminer si oui ou non le paquet est normal.

10. Procédé selon l'une quelconque des revendications 7 à 9, **caractérisé en ce que** l'information de table de routage (160) inclut une information de table qui indique la correspondance entre un espace d'adresse auquel un segment de réseau de destination du paquet appartient et un segment de réseau de destination d'émission.

11. Procédé selon la revendication 7, **caractérisé en ce qu'**il comprend en outre l'étape de :
contenance des paquets qui sont reçus au niveau de l'étape de réception en correspondance avec les segments de réseau de destination d'émission respectifs,
dans lequel l'étape d'émission recherche le paquet qui a été identifié comme étant normal et dont l'adresse MAC a été réécrite au moyen de l'étape de réécriture d'adresse MAC parmi les paquets qui sont contenus au niveau de l'étape de contenance et émet le paquet sur le segment de réseau de destination d'émission qui est décidé au moyen de l'étape de décision.

12. Support de stockage lisible par ordinateur utilisé dans un appareil pour transférer des paquets entre des segments de réseau, le support de stockage comprenant :
un moyen pour faire en sorte qu'un ordinateur reçoive un paquet qui est émis depuis un segment de réseau de source d'émission ;
un moyen pour faire en sorte qu'un ordinateur détermine si oui ou non le paquet qui est reçu dans le moyen de réception est un paquet normal ; et
un moyen pour faire en sorte qu'un ordinateur décide d'un segment de réseau de destination d'émission du paquet qui a été déterminé comme étant normal par l'ordinateur de détermination en utilisant une information de table de routage,
**caractérisé en ce qu'**il comprend en outre :
un moyen pour faire en sorte qu'un ordinateur réécrive une adresse MAC du paquet qui a été identifié comme étant normal par l'ordinateur de détermination selon une adresse MAC qui est présente sur le segment de réseau de destination d'émission ;
un moyen pour faire en sorte qu'un ordinateur utilise une information de table de correspondance (350) qui indique une correspondance entre un numéro de service de destination du paquet qui est reçu dans le moyen de réception et une adresse de réseau de destination après réécriture ;
un moyen pour faire en sorte qu'un ordinateur réécrive l'adresse de réseau du paquet selon une adresse de réseau de destination qui correspond à un numéro de service de destination du paquet conformément à l'information de table de correspondance (350) avant réécriture d'une adresse MAC par le moyen de réécriture d'adresse MAC ; et
un moyen pour faire en sorte qu'un ordinateur émette le paquet normal avec son adresse MAC réécrite sur le segment de réseau de destination d'émission qui est décidé par l'ordinateur de décision.

13. Support de stockage lisible par ordinateur selon la revendication 12, **caractérisé en ce que** l'ordinateur de détermination analyse si oui ou non une information qui est incluse dans le paquet qui est reçu dans l'ordinateur de réception inclut une cause possible d'un dysfonctionnement d'un logiciel d'un dispositif qui est connecté au segment de réseau de destination d'émission et réalise un traitement d'analyse de paquet pour déterminer si oui ou non le paquet est un paquet normal.
